# EUROPEAN PATENT SPECIFICATION

(11) **EP 2 180 224 B1**
(45) Date of publication and mention of the grant of the patent: **26.03.2014**
(21) Application number: 09174147.0
(22) Date of filing: 27.10.2009
(51) Int. Cl.: F16L 37/088, F16L 37/092

(54) **Pipe joint**
Rohrverbindung
Raccord de tuyau

(30) Priority: 27.10.2008 JP 2008276183
(43) Date of publication of application: 28.04.2010
(73) Proprietor: INOAC Housing & Construction Materials Co., Ltd, Nagoya-shi, Aichi 456-0068 (JP)
(72) Inventor: Ikeda, Koji, Nagoya-shi, Aichi 456-0068 (JP)
(74) Representative: HOFFMANN EITLE

(56) References cited:
- DE-U1- 9 308 181
- JP-A- 2004 232 692

## Description

The present invention relates to a one-touch pipe joint which is used as a joint for water pipes or the like and which enables a joint connection simply by inserting a pipe such as a resin pipe,

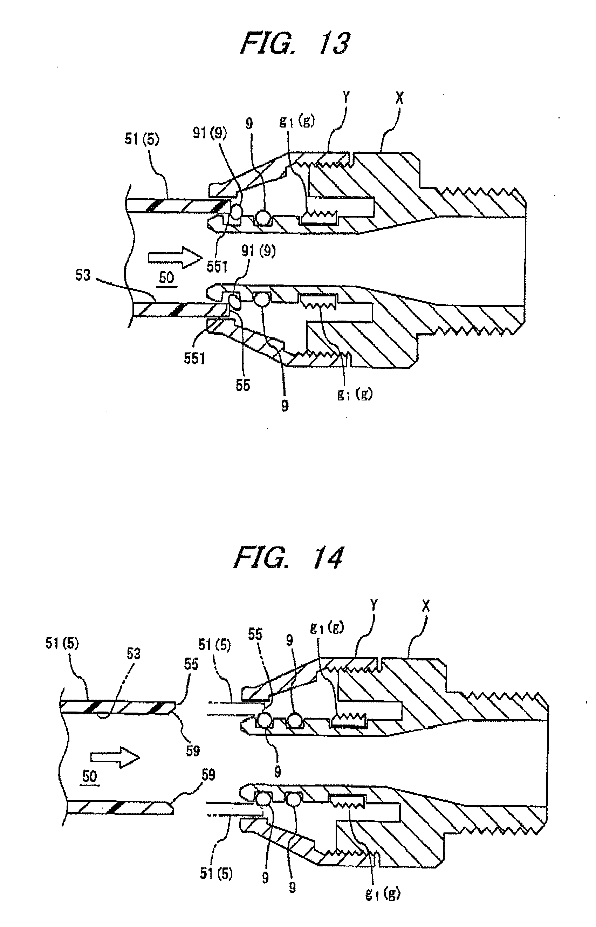

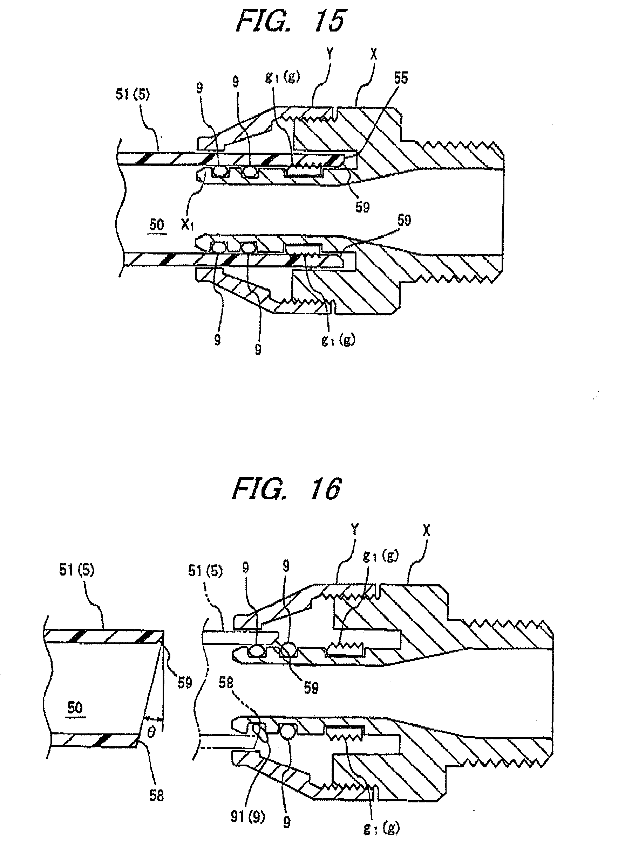

There is a pipe joint to which a pipe such as a resin pipe is joined simply by inverting the pipe. As shown in Figs 14 and 15 for example, the pipe joint is configured such that, when a pipe 5 to be connected is fitted on a cylindrical sleeve X1 protruded from a joint main body X, O-ring packings 9 attached aground an outer peripheral surface of the sleeve X1 firmly contacts to seal the pipe 5, and serrations g₁ of a lock ring g bite into the pipe 5, whereby the pipe 5 is connected and joined to the pipe joint. The pipe 5 is, for example, wound into a roll having a diameter of about lm to be carried on a vehicle, and is stretched straight and cut into a required length when being used at a work site. However, even if the pipe 5 is stretched, it is sometimes not stretched sufficiently straight in which case the pipe 5 is obliquely cut. In a case in which the obliquely cut pipe 5 is fitted on the sleeve X1, the packing 9 may be upwardly distorted or damaged.

In order to address the problem described above, JP2003-314775A proposes an insertion type pipe joint **characterized in that** a tapered ring has a forwardly widened tapered part which becomes narrower toward the rear from a front end portion of an inner peripheral surface thereof, wherein the minimum inner diameter of the tapered part is set equal to or smaller than the standard inner diameter of the pipe.

However, the pipe joint disclosed in JP2003-314775A has following problems. In this paragraph, reference numerals and figure numbers are those used in JP2003-314775A. Firstly, in the background section, JP2003-314775A describes that "while the minimum inner diameter of the tapered part 48 is set equal to the standard inner diameter of the pipe P, when a pipe P having an inner diameter which is the minimum inner diameter within tolerance is inserted as shown in Fig, 11, an outer diameter portion of the elastic seal ring 32 cannot be pressed by the tapered ring 35 to become smaller than the inner diameter of the pipe P, which raises a problem that an inner diameter portion of the pipe P gets stuck against the outer diameter portion of the elastic seal ring 32 thereby impairing the insertion performance of the pipe P". Thus, the minimum inner diameter of the tapered part needs to be set equal to or smaller than the standard inner diameter of the pipe as described above, which requires severe precision. Further, since the tapered ring is a resin molded product, the range of elastic deformation of the tapered ring is limited. That is, although JP2003-314775A describes that "even if the pipe is cut obliquely to some extent, the tapered ring 22 deforms along the obliquely cut end face C of the pipe P", the allowable oblique angle of the cut end face is limited to a certain extent. Furthermore, because "the hollow shaft 15 is configured such that a, plurality of axially extending cutout portion 14 is formed in the circumference thereof at intervals in the circumferential direction so as to be expandable and shrinkable" as described in paragraph [0026] of JP2003-314775A, the elasticity deformable characteristic of the tapered ring gives rise to the following drawback. That is, when one end portion of the pipe P is inserted into the hollow shaft 15 of the collet, the elastically deformable tapered ring 22 may not "be pushed deep inside the pipe insertion space 12 by the cut end face of the one end portion of the pipe P such that the tapered part 24 of the tapered ring 22 contacts the outer peripheral portion of the elastic seal ring 2 protruding from the sealing groove 13 of the inner cylindrical member 5 and compresses the ring 22", but may outwardly expand in a radial direction by pushing expanding the hollow shaft 15, resulting in a difficulty in smoothly attaching the pipe P to the joint main body without butting against the elastic seal ring 32.

On the other hand, even when a great care is taken not to cut the pipe 5 obliquely with a pipe cutter whereby the pipe end face 55 is perpendicularly cut with respect to the pipe main body 51, it is found that there still are problems when fitting the pipe 5 onto the sleeve. That is, when inserting the pipe 5 along the sleeve X1, as shown in Fig. 13, the inner part 551 of the end face 55 of the pipe sometimes butt against the packing 9 and deforms the packing 9 into a shape 91 which impairs the sealing function of the packing 9, and in some cases, moreover, the inner part 551 of the end face 55 pushes out the packing 9 from a ring-shaped groove in which the packing 9 has been fitted, In addition, recently used pipes are sometimes a metal composite pipe having a core member made of a metal such as aluminum and resin layers provided on the core member as inner and outer layers. In such a case, when the pipe is cut with a pipe cutter, the end face of the pipe becomes flattened into an elliptical shape. If the elliptical end face is left as it is, the pipe cannot be properly fitted on the sleeve,

In order to address the problems described above, most of the pipe workers nowadays use a jig called a pipe chamfering tool (a so-called hand taper reamer). More specifically, by using the pipe chamfering tool, the shape of the pipe end face 55 is corrected to be in a circular shape and the inner peripheral part of the pipe end face 55 is removed to provide a chamfered inner face 59 as shown in Fig. 14, and thereafter, the pipe 5 is inserted along the sleeve X1 as shown in Fig. 15.

However, in this method, the pipe workers need to purchase the pipe chamfering tool and carry it to the work site. Moreover, the chamfering process is required before the actual piping work. Further, in a case in which the pipe 5 is obliquely cut at a rather large angle θ as shown in Fig. 16, unprocessed part 58 remains at, for example, on a lower portion of the inner peripheral part of the pipe end face where it cannot be chamfered by the pipe chamfering tool. This unprocessed part 58 can butt against the packing 9 to cause a problem. Therefore, the use of the pipe chamfering tool still leaves some drawbacks.

A similar pipe joint comprising the features of the preamble of claim 1 is disclosed in JP 2004-232692 A.

The present invention is made in view of the problems described above, and it is an object thereof to provide a pipe joint which enables, without a use of a chamfering tool for shaping and chamfering an end face of a pipe or any other preprocessing, and even if the pipe is cut obliquely, a joint connection by smoothly inserting the pipe along a sleeve directly after the cutting.

According to a first aspect of the invention, a pipe joint is provided having the features of independent claim 1.

According to this configuration, when the correcting member loosely fitted on the sleeve moves horizontally along the sleeve, it is always the sloped portion of the correcting members that butts against the packing. Further, the cylindrical inner wall of the cap nut prevents the correcting member from increasing its diameter. Therefore, a component force of an external force applied to the sloped portion presses and sinks the packing, which is an elastic lumber, into the ring-shaped groove. This can solve a problem that the inner part of the end face the pipe butts against the packing during the movement of the pipe along the sleeve and deforms the packing into a shape that impairs the sealing function of the packing. Further, because the correcting member is elastiCally deformable, even when the pipe is cut obliquely, the correcting member elastically deforms accordingly, Therefore, the obliquely cut pipe can be directly and smoothly fitted onto the sleeve. Furthermore, because the hardness of the correcting member is set equal to or higher than the hardness of the packing, and the cap nut includes a cylindrical inner wall to which the correcting member lies close or contacts at least in the range in which the correcting member moves over a portion of the sleeve where the packing is fitted, the elastic packing can be effectively pressed and sulk into the ring-shaped groove using the external force applied to the sloped portion.

According to a second advantageous aspect of the invention, during the movement of the correcting member coward the base end of the sleeve, the packing catches the sloped portion such that the small diameter portion is disposed on a side of the packing which is closer to a distal end of the sleeve. Upon further receiving the pressure from the pipe to be fitted on the sleeve, the sloped potion presses and deforms the packing to run over the packing and further moves award the base end of the sleeve.

According to this configuration, under the un-used condition before the pipe is connected to the pipe joint, the pipe joint is maintained in a state in which no load is applied so that the packing is not elastically compressed. Therefore, a long-term storage of the pipe joint is possible after assembling the pipe joint.

According to a third advantageous embodiment of the invention, a distal end portion of the sleeve comprises a tapered part having an outer diameter which gradually decreases toward the distal end of the sleeve.

According to this configuration, even when a pipe is cut by a pipe cutter and the end face of the pipe is thereby flattened, in the step of fitting the pipe with the outer surface of the sleeve, the taper part corrects the shape of the end face of the pipe to be in a circular shape.

According to a fourth advantageous embodiment of the invention, the pipe joint further comprises a lock ring having an outer diameter which is large than the inner diameter of the small diameter portion, A peripheral groove is formed in the outer peripheral surface of the sleeve at a location closer to the distil end of the sleeve than from a location where the correcting members is loosely fitted on the sleeve. The lock ring is fitted in the peripheral groove to stop a movement of the correcting member toward the distal end of the sleeve,

According to this configuration, the correcting member is prevented from dropping off the sleeve after assembling the pipe joint. Therefore, in addition to the advantage of long-term storage, the assembled pipe joint is easy to handle.

The pipe joint according to the invention is remarkably advantageous in that it can eliminate the need of the preprocessing to chamfer the inner part of the end face of the pipe or to correct the end face of the pipe to be in a circular shape, using a chamfering tool. Further, even an obliquely cut pipe, which cannot be dealt with by a chamfering tool, can be directly inserted along the sleeve so as to be joined to the pipe joint at a single touch.

Hereinafter, exemplary embodiments of the present invention will be described in detail with reference to the drawings which show:
- Fig. 1:: a front view of a pipe joint according to a first embodiment of the invention with the upper half of the pipe joint shown as a sectional view;
- Fig. 2:: an explanatory sectional view of an integral body provided when a pipe to be connected is inserted into the pipe joint shown in Fig. 1;
- Fig. 3:: a sectional view of a portion of the pipe joint shown in Fig. 1 around a correcting member;
- Fig, 4:: a sectional view of the portion shown in Fig. 3, showing a state where, upon receiving a pressure from a pipe to be inserted over a sleeve from the state shown in Fig. 3, the correcting member presses and deforms a packing;
- Fig. 5:: an enlarged view of Fig. 4;
- Fig. 6:: a sectional view of the pipe joint, showing a state where, when an obliquely, cut pipe is inserted over a sleeve from the state shown in Fig. 3, the correcting member and packing are deformed;
- Fig. 7:: a sectional view of the pipe joint, showing a state where, when an obliquely cut pipe is inserted over a sleeve from the state shown in Fig. 3, the correcting member and packing are deformed;
- Fig. 8A:: a perspective view of the correcting member when it is viewed from the base end side of the sleeve;
- Fig. 8B:: a perspective view of the correcting member when it is viewed from the distal end side of the sleeve;
- Fig. 9A:: a plan view of a lock ring;
- Fig. 9B:: a sectional view taken along the line IX-IX in Fig. 9A;
- Fig. 10:: a sectional view corresponding to Fig. 3, in which there is used a correcting member according to a different embodiment from the embodiment shown in Figs, 1 to 7 and which is not within the scope of the present invention;
- Fig. 11:: a sectional view, showing a state where, upon receiving a pressure from a pipe to be inserted over a sleeve, the correcting member shown in Fig. 10 presses and deform the packing;
- Fig. 12:: a front view of a pipe joint according to a second embodiment of the invention different from the embodiments shown in Figs. 1 to 11, with the upper haft of the pipe joint shown in section;
- Fig. 13:: an explanatory sectional view of a conventional pipe joint;
- Fig. 14:: another explanatory sectional view of the conventional pipe joint;
- Fig. 15:: another explanatory sectional view of the conventional pipe joint; and
- Fig. 16:: another explanatory sectional view of the conventional pipe joint.

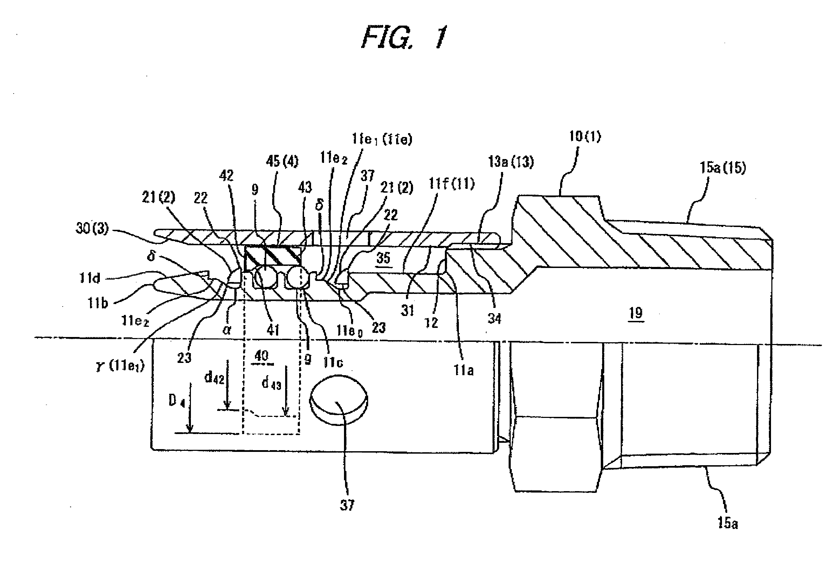

As shown in Fig. 1, a pipe joint includes a joint main body 1, a packing 9, a correcting member 4, a lock ring 2, and a cap nut 3. In the pipe joint in which the above components are assembled together, when a pipe 5 to be connected is inserted from the opening 30 of the cap nut 3 and is fitted with the outer peripheral surface of a sleeve 11 (thai is, the pipe 5 is fitted on the sleeve 11), a packing 9 seals between the pipe 5 and sleeve 1 and also the pawls 22 of the lock ring 2 bite into the pipe 5, whereby the pipe 5 can be connected to the pipe joint as an integral body.

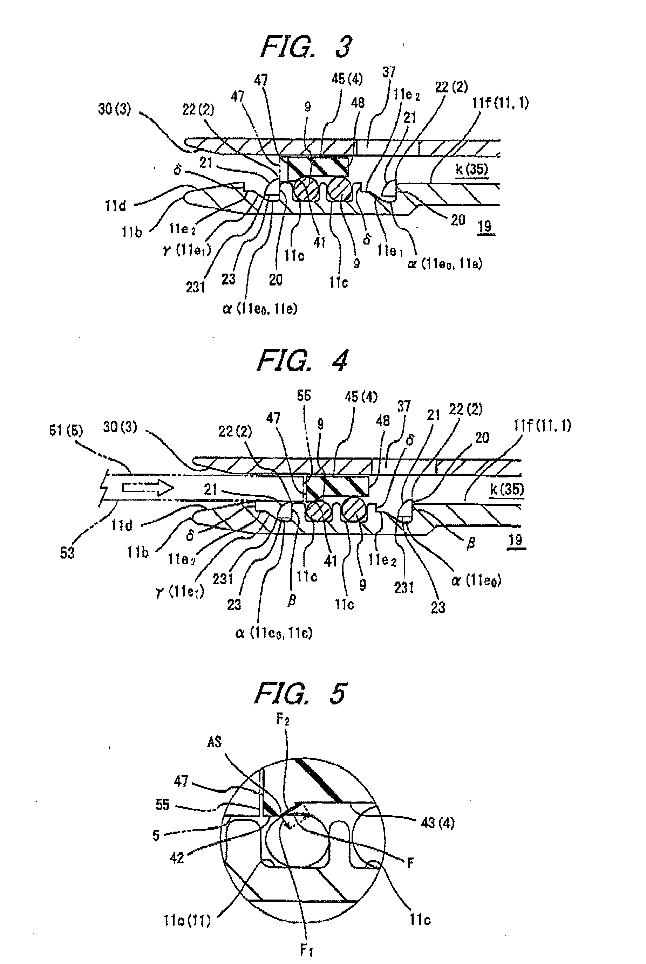

The joint main body 1 is a part which includes main portion 10 situated in the central portion of which and a cylindrical sleeve 11 provided on and projected from the main portion 10, and the joint main body 1 serves as the main component of the pipe joint (Fig. 1). On the side of the main portion 10 where the sleeve 11 exists, there is provided a fastening portion 13 on which the cap nut 3 can be mounted and, on the opposite side thereof, there is provided a connecting portion 15 which can be connected to other joint, In the outer peripheral surface 11f of the sleeve 11, there are formed ring-shaped grooves 11c an which their associated packings 9 can be mounted, and peripheral grooves 11e on which the lock ring 2 can be mounted (Fig. 3). The joint main body 1 according to this embodiments includes, in addition to the rectangular columnar shaped main portion 10 that can be held with a tool, a projecting portion 12 projected axially from one end face of the main portion 10 and provided with the fastening portion 13 having a male screw portion 13a on the outer periphery thereof, and also the sleeve 11 which is projected further from the end face of the projecting portion 12. The other end face of the main portion 10 is projected axially to form the connecting potion 15 having a male screw portion 15a on the outer periphery thereof. In order that the pipe joint can function as a pipe joist, in the joint main body 1, there is formed a communication hole 19 which extends axially from the sleeve 11 and penetrates through the projecting portion 12, main portion 10 and connecting portion 15, which are formed as a one-piece body. For the ring-shaped groove 11c, there are two ring-shaped grooves 11c which are the same in shape and are slightly spaced from each other, and, for the peripheral groove 11e, there are formed two peripheral grooves 11e a, piece on the distal end 11b side and base end 11a side of the sleeve 11 in such a manner that they surround the two ring-shaped grooves 11c. The peripheral groove 11e formed on the sleeve distal end 11b side is disposed at a position nearer to the sleeve distal end that the disposition position of the correcting member 4 that can be loosely fitted on the sleeve 11. The expression the base end of the sleeve" is used from the viewpoint that the sleeve 11 is protruded from the main portion 10. From the viewpoint that the pipe 5 is inserted from the sleeve distal end 11b toward the deep side of the sleeve 11 when inserting the pipe 5 over and along the sleeve 11, the expression "the base end of the sleeve" corresponds to the deep end of the sleeve 11,

The ring-shaped groove 11c is formed in the outer peripheral surface 11f of the sleeve 11 in such a manner that it is uniform in section and extends around the sleeve outer peripheral surface 11f. For the shave of the ring-shaped groove lie, it is projected from the sleeve outer peripheral surface 11f around the outer peripheral portion of the packing 9 and has such a concave-shaped section as can store and hold the packing 9 therein. On the other hand, the peripheral groove 11e is also formed in the outer peripheral surface ill of the sleeve 11 in such a manner that it is uniform in section and extends around the sleeve outer peripheral surface 11f. For the shape of the peripheral groove 11e, as shown in Fig. 1, it has the following groove shape. That is, the peripheral groove 11e includes a deep groove portion 11e₀ into which the lock ring 2 can be stored initially and, in addition to this, a sloping groove portion net haying a rising sloping surface formed by extending the wall surface of the deep groove portion 11e₀ on the sleeve distal end 11b side upwardly and slopingingly from the bottom surface of the deep groove portion 11e₀ toward the sleeve distal end 11b. To this peripheral groove 11e, there is further added a straight portion 11e₂ which has a uniform outer diameter and extends from the sloping portion 11e₁ toward the cylindrical-shaped distal end 11b. As the groove wall of the straight portion 11e₂ on the cylindrical distal end 11b side, there is formed a front wall is which rises vertically from the groove bottom in the outward radial direction of the cylindrical-shaped portion, In the distal end portion of the sleeve 11, there is formed a tapered part 11d the outer diameter of which decreases gradually toward the sleeve distal end 11b.

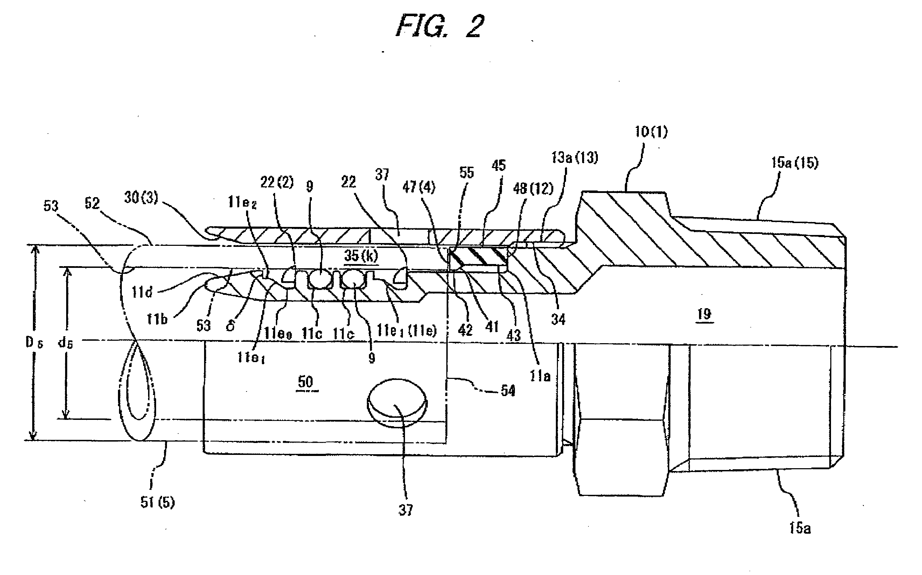

The packing 9 is a member which is fitted in the ring-shaped groove 11e and firmly contact the pipe 5 to be fitted on the sleeve 11 to seal the pipe 5. In this embodiment, the packing 9 is an O-ring made of rubber or the like. When the O-ring 9 is mounted on the ring-shaped groove 11c, the outer peripheral portion of the O-ring 9 is projected from the ring-shaped groove 11c. The O-ring 9 firmly contacts the pipe 5 which is inserted from the opening 30 of the cap nut 3 to be fitted on the sleeve 11, whereby the O-ring 9 seals between the pipe 5 and sleeve 11 (Fig. 2),

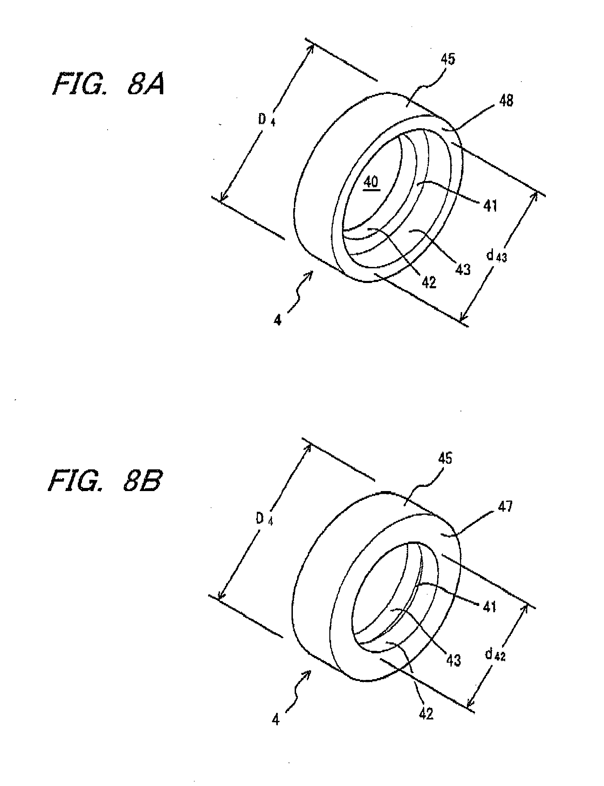

The correcting member 4 is a cylindrical member which is loosely fitted on the sleeve before the pipe 5 is fitted on the sleeve 11 (Figs. 8A and 8B). The correcting member 4 includes a small diameter portion 42 the inner diameter of which is set smaller than the outer diameter of the packing 9 and a sloped portion 41 which extends from the small diameter 42 and the diameter of which increases gradually toward the base end 11a of the sleeve 11, and the inner diameter of the portion of the correcting member 4 to be disposed on the base side 11a of the sleeve 11 through the sloped portion 41 is set larger than the inner diameter of the portion of the correcting member 4 to be disposed on the distal end 11b side of the sleeve 11. More specifically, the inner diameter of one end face 48 of the collecting member 4, which is closer to the base end 11a of the sleeve 11, is larger than the inner diameter of the other end face 47 of the correcting member 4. The pipe joint is set in such a manner that, when receiving pressure from the pipe 5 inserted from the opening 30 and fitted on the sleeve 11, the correcting member 4 is moved toward the base end 11a side of the sleeve 11.

The correcting member 4 according to this embodiment is a cylindrical member which, as shown in Figs. 8A and 8B, is uniform in the outer diameter thereof, and the outer diameter of the correcting member 4 is set slightly smaller than the inner diameter of the cap nut 3. The correcting member 4 is set such that, when it is loosely fitted on the sleeve 11, the correcting member 4 lies close to or contacts the cylindrical inner wall 31 of the cylindrical cap nut 3 at least in a range in which the correcting member 4 moves over a portion of the sleeve 11 where the packing 9 is fitted. In this embodiment, the correcting member 4 is set such that the connoting member 4 lies close to or touches the cylindrical inner wall 31 of the cylindrical cap nut 3 in the movable range of thereof on the sleeve 11. Reference numeral 40 designates a cylindrical hole. Referring to the inner diameter of the correcting member 4, as shown in Fig. 1, the inner diameter increases gradually along the sloped portion 41 situated on the right of the small diameter portion 42 having a uniform inner diameter d₄₂, and becomes an inner diameter d₄₃ which is equal to or slightly larger than the outer diameter of the packing 9. The cylindrical member is - expended while keeping the inner diameter d₄₃, there is formed a large diameter portion 43. The inner diameter d₄₃ of the large diameter portion 43 may be set equal to the outer diameter of the packing 9 or may be set for a size which, if the packing 9 can be stored within the large diameter portion 43, can provide a slight clearance between the large diameter portion 43 and packing 9, The correcting member 4 includes the small diameter portion 42, sloped portion 41 and large diameter portion 43 from the distal end side of the sleeve 11 toward the base end 11a side of the sleeve 11, while the large diameter portion 43 occupies the major part of the correcting member 4. The correcting member 4 can be loosely fitted on the sleeve 11 and, in a state where the pipe joint is not in use, as shown in Fig. 3, the correcting member 4 is allowed to move between a chained line position where the end face 47 of the small diameter portion 42 hits the look ring 2 and a solid line position where the sloped portion 41 hits the O-ring 9. The correcting member 4 is set in the following manner. That is, in the loosely fitted state thereof, at the solid line position shown in Fig. 3 where the packing 9 catches the sloped portion 41, the large diameter portion 43 covers the first and second O-rings 9. At this point the large diameter portion 43 has a length which goes beyond the first O-ring 9 situated on the sleeve distal end side of Fig. 3 and further beyond the top portion of the second O-ring 9 on the sleeve bass end 11b side off Fig. 3. In this embodiment, the inner diameter d₄₃ of the large diameter portion 43 set substantially equal to the outer diameter of the O-ring 9. In a state where the large diameter portion 43 covers the first and second O-rings 9 as shown in Fig. 1, the correcting member. 4 is loosely fitted on the sleeve 11 under the non-use state of the pipe joint due to the contact force between the O-rings 9, which are adhesive due to the property of the rubber, and the large diameter portion 43, however, in this case, the correcting member 4 is prevented against needless movement.

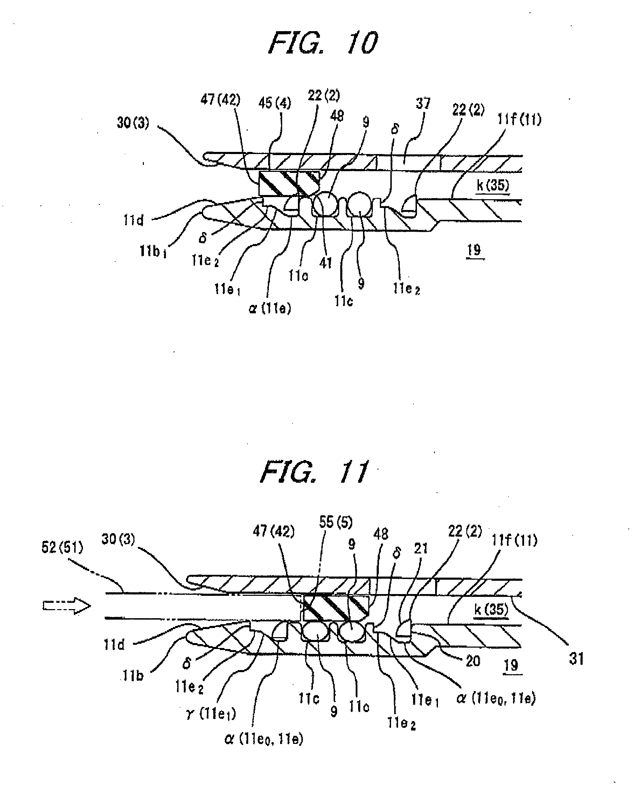

In Fig. 10, which shows a second embodiment which is not according to the invention, the correcting member 4 is structured in the following manner. That is, in the rear of the small diameter potion 42 having a uniform inner diameter, the correcting member 4 may increase gradually in the inner diameter thereof and may terminate at the stage where it has an inner diameter equal to or slightly larger than the outer diameter of the packing 9. The two correcting members 4 respectively shown in Figs. 1 to 8 and in Fig. 10 are both cylindrical members which can be loosely fitted on the sleeve 11 before the pipe 5 is fitted on the sleeve 11, and upon receiving pressure from the pipe 5 inserted from the opening 30 of the cap nut 3 and fitted on the sleeve 11, the correcting members 4 can be respectively moved toward the base end 11a. of the sleeve 11. Here, in the case of the correcting member 4 shown in Fig. 10, before the pipe 5 is fitted on the sleeve 11, the correcting member 4 is loosely fitted on the sleeve 11. More preferably, as shown in Fig. 11, in a state where the correcting member 4 is prevented from spreading its diameter by the cylindrical inner wall of the cap nut 3, the packing 9 may be pressed and deformed and then the correcting member 4 may get on the packing 9. The reason for this is that the distance between the lock ring 2 disposed on the sleeve distal end 11b side and first O-ring 9 can be reduced.

The correcting member 4 is made of elastically deformable material (here, rubber) and, specifically, the correcting member 4 is an elastic member made of rubber or thermoplastic elastomer or foaming material, and the hardness of the correcting member 4 is set equivalent to or higher than the hardness of the packing 9. The reason for this is that, when the obliquely cut pipe 5 is inserted over the sleeve 11, the correcting member 4 can be elastically deformed according to the obliquely cut end face 55 of the pipe 5 to receive the pipe 5, thereby allowing the pipe 5 to be fitted on the sleeve 11 smoothly As for the relationship between the correcting member 4 and pipe 5, the inner diameter d₄₂ of the small diameter portion of the correcting member 4 may be set equal to or slightly smaller than the inner diameter d₄₅ of the pipe 5 (Figs. 1 and 2). For the outer diameter of the pipe 5, the outer diameter D₄ of the correcting member 4 may be set substantially equal to the outer diameter D₅ of the pipe 5.

According to the pipe joint shown in Figs. 1 to 7, in the non-use state of the pipe joint before the pipe is connected to this pipe joint, when the correcting member 4 moves toward the sleeve base end 11a, the packing 9 catches the sloped portion 41, and the small diameter portion 42 is disposed nearer to the sleeve distal end 11b than the packing 9. Since the correcting member 4 is restricted by the cylindrical inner wall 31 of the cap nut 3 in order that, on receiving pressure from the pipe 5 fitted on the sleeve 11, the correcting member 4 can be prevented from spreading its diameter, the sloped portion 41 (of the correcting member 4) caught by the packing 9 presses and deforms this packing 9, runs over the thus deformed packing 9, and further moves toward the base end 11a of the sleeve 11. The reason why the hardness of the correcting member 4 is set equal to or higher than the hardness of the packing 9 is that, although the correcting member 4 itself is being elastically deformed, the sloped portion 41 can press and deform the packing 9 reliably. In order to attain the pressing and deformation of the packing 9 more reliably by the sloped portion 41, more preferably, the hardness of the correcting member 4 may be set higher than the hardness of the packing 9,

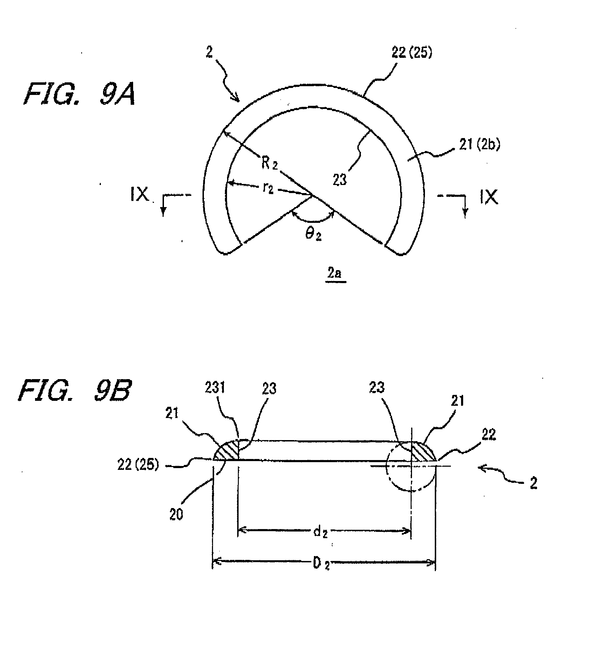

The lock ring 2 is a metal worked member. Specifically, to produce the lock ring 2, a metal-made rod member is processed to form a tip end 22 which functions as a pawl for a lock ring and, after then, the rod member is processed into a C-shaped split ring (Fig. 9A). The worked rod member, which, when it is viewed in section, has one tip end 22 capable of biting into the inner peripheral surface 53 of the pipe 5, is worked into a C-shaped ring with the tip end 22 disposed on the outer peripheral side thereof thereby providing a lock ring, In such a manner that the tip end 22 provides the outer peripheral edge of the split ring having a C-like shape when it is viewed in the plan view thereof, there is provided the lock ring 22 the tip end of which can play the function of the pawl 22 biting into the pipe 5. The tip end pawl 22 bites into and secures the inner peripheral surface of the pipe fitted on the sleeve 11, thereby preventing the pipe 5 from being pulled out of the joint main body 1. For the above-mentioned two peripheral grooves 11e, there are used two lock rings 2 which are the same in shape.

According to this embodiment, a metal-made round rod having a circular longitudinal section shown by a chained line in Fig. 9B is press worked, that is, sheared to produce a lock ring which is split into a size smaller than a 1/4 arc shown by a solid line in Fig. 9B. The worked rod member, which is formed into a size smaller than a 1/4 arc, provides a product which includes the tip end 22 having a more acute angle than a cut product of a 1/4 arc and also has a section shape uniform in the longitudinal direction thereof. The acute angle of the tip end 22 can facilitate the biting of the tip end 22 into the pipe inner peripheral surface 53 as the pawl. After then, the worked rod member with such tip end is formed into a split ring in such a manner that, as shown in Fig. 9A, the tip end 22 can provide an outer periphery having a continuous ridge. That is, the lock ring 2 is formed as a C-shaped split ring. As shown in Fig. 9B, the up end 22 is disposed on the outer peripheral side and the flat bottom portion 23 is disposed on the inner peripheral side, whereby there is produces a lock ring 2 formed as a. C-shaped split ring. The lock ring 2 is mounted on the peripheral grooves 11e in such a manner that, as shown in Fig. 1, the bottom portion 23 is disposed opposed to the bottom portion α of the deep groove portion 11e₀ and the front surface portion 21 having an arc-shaped curved surface is disposed on the sleeve distal end 11b side. The mouth of the split ring is spread and is elastically deformed, while the lock ring 2 is mounted on the deep groove portion 11e₀ of the peripheral groove 11e. After the lock ring 2 is mounted, the outer diameter D₂ of the split ring is made larger than the inner diameter d₅ of the pipe 5 and the pawl 22 bites into the pipe 5 fitted on the sleeve 11, thereby connecting the pipe 5 to the pipe joint as an integral body (Figs. 2 and 9B). While the outer diameter D₂ of the mounted lock ring 2 normally has an almost elliptical shape, the length of a portion of the lock ring 2 that corresponds to the major axis of the elliptical shape (the major axis portion) may be larger than the pipe inner diameter d₅. The reason for this is that the pawl 22 situated on the major axis portion of the lock ring 2 can bite into the inner surface of the pipe 5 and thus can connect the pipe 5 to the pipe joint integrally. Also, when the major axis portion of the elliptical lock ring 2 is larger than the inner diameter d₄₂ of the small diameter portion 42, the movement of the correcting member 4 toward the sleeve distal end 11b can be stopped by the lock ring 2. When the O-ring 9 and lock ring 2 are mounted on the sleeve 11, and further, while the correcting member 4 loosely fitted on the sleeve 11 is being covered, the cap nut 3 is threadedly mounted on the joint main body 1 as an integral body to thereby form an assembled product serving as a pipe joint, the pipe joint can prevent the correcting member 4 from dropping from the sleeve 11. Meanwhile, when a give external force is applied to the correcting member 4, the elastically reformable correcting member 4 is able to go over the lock ring 2, however, such phenomenon can never occur under the normal handling condition such as the normal storage or normal carriage.

The cap nut 3 is a metal product in which a female screw portion 34 formed in the inner peripheral surface thereof can be threadedly engaged with the male screw portion 13a of the joint main body 1 (Fig. 1). The cap nut 3 is formed to have such a size as allows the cap nut to be mounted on the joint main body 1 while covering the O-ring 9 and lock ring 2 respectively mounted on the sleeve 11, the correcting member 4 loosely fitted on the sleeve 11 and this sleeve 11. In the head portion of the cap nut 3, there is formed a circular-hole shaped opening 30 into which the pipe 5 to be connected is inserted. The cap nut 3 is formed as a cylindrical member including a cylindrical inner wall 31 to which the correcting member 4 lies close or contacts at least in the range in which the correcting member 4, due to the insertion of the pipe 5 into the sleeve 11, moves over a portion of the sleeve 11 where the packing 9 is fitted. In this embodiment, the cap nut 3 is formed as a cylindrical member including a cylindrical inner wall 31 to which the correcting member 4 lies close or contacts in the entire range in which the correcting member 4 moves on the sleeve 11. Reference numeral 35 designates a through hole formed in the cap nut 3. The cap nut 3 according to this embodiment is formed to have a cylindrical shape the cylinder outer diameter and inner diameter of which are substantially uniform, and for the inner diameter, the mouth of the cap nut 3 increases in the inner diameter thereof toward the opening formed in one end side thereof, thereby facilitating the insertion of the pipe 5 into the pipe joint In the other end side cylinder inner surface of the cap nut 3 existing on the opposite side of the opening 30, there is formed a female screw portion 34 which can be threadedly engaged with the male screw portion 13a of the fastening portion 13. The cap nut 3 is set in the following manner. That is, at the stage where the cap nut 3 is assembled as a pipe joint, the inner diameter of the cap nut 3 from the lock ring 2 mounted on the sleeve distal end 11b side to the sleeve base end 11a is uniform and is slightly larger than the outer diameter D₄ of the correcting member 4. Reference numeral 37 designates a through hole serving as a peephole for confirming whether the pipe 5 to be inserted into the pipe joint has been inserted up to a given position or not.

Description will be given below of the pipe 5 to be connected to the pipe joint. It is to be noted that the pipe 5 is not the component of the pipe joint, The pipe 5 that can be used with the pipe joint is, for example, a resin pipe made of synthetic resin or a composite pipe made of synthetic resin and metal. Specifically, there is available a metal combined cross-linked polyethylene pipe in which a core member is made of metal such as aluminum excellent in mechanical strength and also inner and outer layers are respectively made of cross-linked polyethylene, or the like. In such a pipe 5 as well, since the resin layer exists as the outer layer thereof, the pawl 22 of the lock ring 2 can elastically bite into the inner peripheral surface 53 of the pipe 5 which is introduced into the sleeve 11 and is fitted on the sleeve 11, whereby, similarly to the resin pipe, there can be obtained the operation and effects of the invention. In the drawings, reference numeral 50 designates a pipe hole, 51 a pipe main body, and 52 a pipe oater periphery suffice, respectively.

Next, description will be given below of the using procedure and operation of the pipe joint having the components described above and shown in Figs. 1 ta 9B. Firstly, the first and second O-rings 9 are mounted onto the ring-shaped grooves 11c formed in the sleeve 11 of the joint main body 1 and also the lock ring 2 is mounted onto the peripheral groove 11e on the sleeve base end 11a side. Next, the correcting member 4 is fitted with the sleeve 11, that is, the correcting member 4 is loosely fitted on the sleeve 11. Then, after the sloped portion 41 of the correcting member 4 is moved near to the first O-ring 9, the lock ring 2 is mounted on the peripheral groove 11e on the sleeve distal end 11b side. After then, the female screw portion 34 of the cap nut 3 is threadedly engaged with the male screw portion 13a formed in the outer periphery of the joint main body 1. This completes the pipe joint.

According to the pipe joint, simply by inserting the pipe 5 through the opening 30 of the cap nut 3 into the sleeve 11, the pipe 5 is joined to the pipe joint Also,since the pipe 5 is a pipe which is cut as it is to a necessary length without deforming the pipe end face 55 into a circular shape or without cutting the inner peripheral surface of the pipe end face 55 to thereby chamfer it, the pipe 5 can be smoothly inserted along the sleeve 11. Specifically, when the pipe 5 to be connected is inserted from the opening 30, the pipe 5 is guided to the sleeve 11 and is Sited with the sleeve 11 from outside. Even when the cut end face 55 of the pipe 5 is cut flat by a cutter or the like into an elliptical shape, the elliptically flattened shape of the end face 55 can be corrected by the tapered part 11d into a circular shape. The pipe end 54 is allowed to move over the lock ring 2 (Fig. 4). Although the pawl 22 is provided on the lock ring 2, at the stage of insertion of the pipe 5 into the sleeve 11, since the insertion direction of the pipe 5 into the sleeve 11 is a direction where the lock ring 2 is pushed into the deep groove portion 11e₀ and also since the are shape front portion 21 of the lock ring 2 is disposed on the sleeve distal end 11b side and is mounted on the peripheral groove 11e the pipe 5 is allowed to slide on the peripheral groove 11e and thus move toward the sleeve base end 11a. When the pipe end 54 reaches the correcting member 4, the pipe end face 55 is contacted with the end face 47 of the correcting member 4 to press against it. Since the correcting member 4 can be reformed elastically, the end face 47 of the correcting member 4 is deformed according to the pipe end face 55 and is contacted with the pipe end face 55. Upon receiving a pressure from the pipe 5, as shown in Fig. 4, the sloped portion 41 of the correcting member 4 presses and deforms the O-ring 9 in a stroking manner. Since the elastically deformable correcting member 4 is restricted by the cylindrical inner wait 31 of the cap nut 3, the correcting member 4 presses the O-ring 9 without spreading in the radial direction. When the O-ring 9 receives pressure from the correcting member 4, the section of O-ring 9 is changed from a circular shape to an elliptical shape. In Fig. 5, a reference sigh AS designates the pressure contact portion of then sloped portion 41 which, on receiving pressure from the pipe 5, presses the O-ring 9, As the pipe 5 is pushed toward the base end 11a, the sloped portion. 41 slides on the first O-ring 9 and elastically deform this O-ring 9 from the shape shown in Fig. 3 to the shape shown in Fig. 4 to crush this O-ring 9, and gets over this O-ring 9. Describing this more specifically with preference to Fig. 5, while a component force F1 a force F applied from the pipe 5 in the sleeve base end 11 a direction acts on the O-ring 9 to elastically deforms and sink it into the ring-shaped groove 11c, the sloped portion 41 moves forward (in the surface of the paper of the drawing, in the right direction). Thus, there is eliminated an inconvenience that, unless the pipe inner surface is chamfered to provide an inner surface chamfering 59, the pipe inner end face 551 is butted against the O-ring 9 to deform it into a shape 91 which impairs the sealing function (Fig. 13), or in a worse case, the pipe end face 551 pushes the packing 9 out of the ring-shaped groove 11c in which the packing 9 has been stored. The correcting member 4 corrects the shape of the O-ring 9 to thereby hold the O-ring 9 back to the ring-shaped groove 11c. In the second O-ring 9 situated on the sleeve base end side as well, similarly to the first O-ring 9, the sloped portion 41 elastically deforms the second O-ring 9 to crush it, and gets over the second O-ring 9. Referring further to this, the packing 9 is situated at the solid line position of Fig, 3 where it catches the sloped portion 41, and the large diameter portion 43 has a length which can cover the first O-ring 9 and further can cover the top portion of the second O-ring 9. Owing to this, the first and second O-rings 9 are prevented from popping up from the ring-shaped grooves 11c for some reason, and all kinds of deformation of the O-rings 9 that impairs the sealing function of the O-rings 9 are reliably prevented.

After then, the pipe 5 slides and passes over the lock ring 2 on the sleeve base end 11a side, similarly to the lock ring 2 on the sleeve distal end side. Thus, the pipe end 54, as shown in Fig. 2, reaches the base end 11a of the sleeve 11 through the correcting member 4. At this point, the O-ring 9, which has been elastically deformed and sunken into the ring-shaped groove 11c, is firmly in contact with the pipe inner surface 53 due to its elastic restoring force and seals the pipe 5 (Fig. 2). Also, the look ring 2 connects the pipe 5 to the joint main body 1 as an integral body. When trying to pull out the pipe 5 fitted on the sleeve 11, the lock ring 2. rises from the deep groove portion 11e₀ along the sloping groove portion 11e₁ to increase the outer diameter of the split ring and thus the pawl 22 bites into the pipe inner surface, whereby the integral connection of the pipe 5 to the pipe joint is intensified further. In this manner the one-touch connection of the pipe 5 to the pipe joint can be attained.

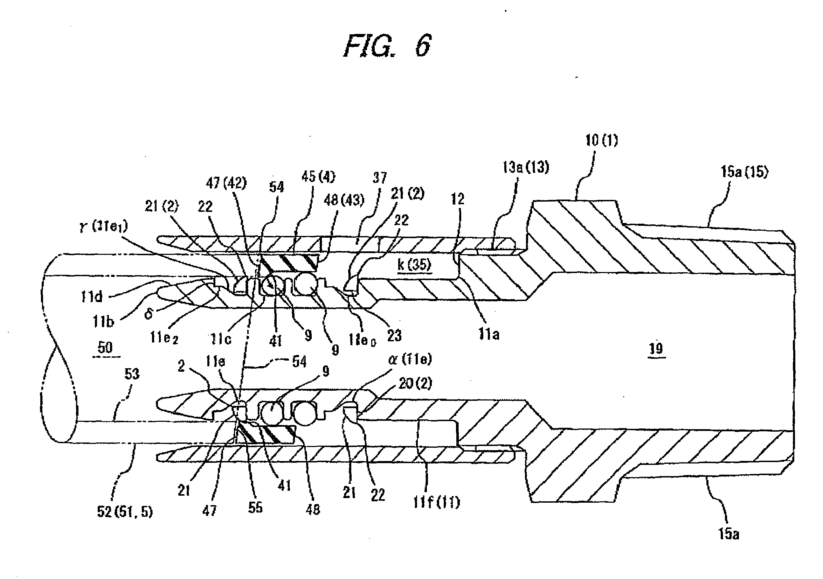

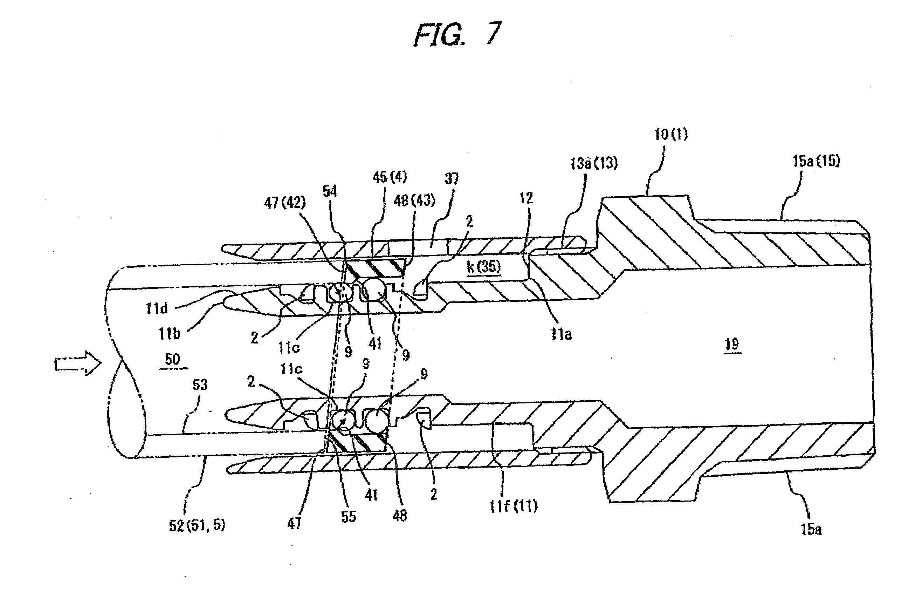

Also, even when the pipe 5 is cut obliquely, the obliquely cut pipe 5, as it is, can be inserted along the sleeve 11. Firstly, the pipe end 54 gets over the lock ring 2. When the pipe end 54 reaches the correcting member 4, the pipe end face 55 is butted against the correcting member 4 and, after then, typically, as shown in Fig. 6, the pipe 5 deforms elastically the elastically deformable correcting member 4 and is contacted with the elastically deformed correcting member 4 to thereby press against it. Even when the correcting member 4 is elastically deformed, since the correcting member 4 is restricted by the cap nut 3, the outer diameter of the correcting member 4 is prevented from increasing. Therefore, owing to the pressure of the pipe 5 going toward the sleeve base end 11a., the sloped portion 41, which is upwardly situated in Fig. 6 and also from which the pipe end 54 projects up; firstly slides on the 0-ring 9 to crush it due to the elastic deformation, and then the sloped portion 41 and small diameter portion 42 get over the thus crushed O-ring 9. Following them, as shown in Fig. 7, the sloped portion 41 situated downwardly of the pipe end face 55 slides over the O-ring 9 to crush it due to the elastic deformation, and then the sloped portion 41 and small diameter portion 42 respectively get over the thus crushed O-ring 9. After then, through similar connecting operations executed on the above-mentioned pipe 5 having the pipe end face 55 cut perpendicularly to the pipe 5 to the pipe joint, the integral connection of the obliquely cut pipe 5 to the pipe joint can be completed. That is, the one-touch connection of the obliquely cut pipe 5 to the pipe joint can be attained in this manner.

According to the thus structured pipe joint, even without using a pipe chamfering tool as in the conventional pipe joint, the pipe 5 cut to a necessary length, as it is, can be inserted along the sleeve 11. Even if the inner surface of the pipe 5 is not chamfered, when the pipe 5 is inserted along the sleeve 11, the pipe end face 55 is contacted with the correcting member 4 to thereby produce a state where they seem to be connected together, whereby the sloped portion 41 of the correcting member 4 plays the role of the inner surface chamfering. The pipe end face 54 does not butt against the O-ring 9 directly, but the sloped portion 41 of the correcting member 4 butts against this O-ring 9. Although the pressure F is applied from the pipe 5 to the correcting member 4 in the sleeve axial direction, since, in the sloped portion 41 in contact with the O-ring 9, the component force F1 of the pressure F pushes and sinks the O-ring 9 into the ring-shaped groove 11c due to the elastic deformation of the O-ring 9, the sloped portion 41 is allowed to get over this O-ring 9 easily, Following the sloped portion 41, the small diameter portion 42 and pipe 5 can also pass over this 0-ring 9 easily, After then, as shown in Fig. 2, when the pipe end 54 arrives at the base end 11a of the sleeve 11 through the correcting member 4, the O-ring pushed and sunken into the ring-shaped groove 11c can firmly stick to the pipe inner peripheral surface due to its elastic restoring force to thereby seal it. At the same time, the pawl 22 of the lock ring 2 mounted on the peripheral groove 11e bites into the inner peripheral surface of the pipe 5 fitted on the sleeve 11, whereby the pipe 5 can be connected to the pipe joint as an integral body. When trying to pull out the pipe 5, the lock ring 2 rises from the deep groove portion 11e₀ along the sloping groove portion 11e₁ to increase the diameter of the lock ring 2, and the pawl 22 bites into the pipe inner surface more deeply, whereby the one-touch connection of the pipe 5 to the pipe joint can be intensified further. That is, the one-touch connection of the pipe 5 to the pipe joint can be achieved smoothly and positively. Also, suppose the pipe 5 is cut using a pipe cutter, even when the pipe diameter d₅ of the pipe end face 55 is flattened into an elliptic shape, since the tapered part 11d is provided on the distal end portion of the sleeve 11, simply by inserting the pipe 5 into the sleeve 11, the elliptically flattened pipe 5 can be corrected to a circular shape while the insertion of the pipe 5 is in progress. Thus, the pipe joint according to this embodiment can solve the problems found in the conventional pipe joint. That is, for example, an increase in the cost of the pipe joint due to the purchase of a pipe chamfering tool, an operation to carry the pipe chamfering tool to the work site, and the need to carry out a preprocessing such as the inner surface chamfering operation and roundness completing operation.

Further, the connection of the pipe 5 having an obliquely cut end face 55 to the pipe joint has been conventionally difficult even when a chamfering tool is used. However, with use of the pipe joint, the correcting member 4 can follow the obliquely cut end face 55 of the pipe 5 due to its elastic deformation, whereby the pipe 5 can be integrally connected to the pipe joint with no difficulty, Specifically, when the obliquely cut pipe 5 is inserted along the sleeve 11 and is contacted with the correcting member 4, the pressure to insert the pipe 5 deforms elastically the correcting member 4 which is made of an elastic member. The end face 47 of the small diameter portion 42 of the correcting member 4 is elastically deformed according to the shape of the obliquely cut pipe end face 55. When the correcting member 4 receives the pressure from the obliquely cut pipe 5 fitted on the sleeve 11, for example, in Fig. 6, firstly, the upwardly situated sloped portion 41 of the correcting member 4 presses and deforms the first O-ring 9, gets over the thus deformed O-ring 9, and moves toward the base end 11a of the sleeve 11. Following this, as shown in Fig. 7, the downwardly situated sloped portion 41 presses and deforms the first O-ring 9, gets over the thus deformed O-ring 9, and moves toward the base end 11a of the sleeve 11. Similar operations to the first O-ring 9 are executed on the second O-ring 9 existing on the sleeve base end side and the lock ring 2 existing on the sleeve base end side, thereby being able to fit the obliquely cut pipe 5 with the outer surface of the sleeve 11 smoothly. Although the correcting member 4 is elastically deformed, since the hardness of the correcting member 4 is set equal to or higher than the hardness of the packing 9, the correcting member 4 is surely able to press and deform the O-ring 9. Here, even when the cylinder outer peripheral surface of the correcting member 4 is going to spread due to the elastic reformation of the correcting member 4, the cylindrical cap nut 3 prevents such cylinder outer peripheral surface from spreading. Thus, the correcting member 4 is allowed to move forward smoothly through a ring-shaped hole K which is formed by the cylindrical inner wall of the cap nut 3 and sleeve 11. The correcting member 4 further provides the following effects. That is, the cap nut 3 mounted on the joint main body 1 includes the cylindrical inner wall 31 the inner diameter of which is uniform at least from the lock ring 2 to be mounted on the sleeve distal end 11b side to the sleeve base end 11a. The cylindrical inner wall 31 lies close to or contacts the correcting member 4 at least in the range in which the correcting member 4 moves over a portion of the sleeve 11 where the packing 9 is fitted. In this embodiment, the cap nut 3 includes the cylindrical inner wall 31 which can approach or touch the correcting member 4 in the moving range of the correcting member 4 on the sleeve 11. Therefore, since the correcting member 4, which has received the insertion pressure of the pipe 5 due to the insertion of the pipe 5 into the pipe joint, is prevented from spreading its diameter in the radially outward direction by the cylindrical inner wall 31 of the cap nut 3, simply by inserting the pipe 5 into the pipe joint, the correcting member 4 is forced to stay in the radially inward direction. Since the correcting member 4 tends to stay in the radially inward direction, not only the correcting member 4 can press the packing 9 and get over it, but also, without "setting the minimum inner diameter of the tapered part (corresponding to the sloped portion of the embodiment of the invention) equal to or smaller than the standard inner diameter of the pipe" as described in JP2003-314775A, the pipe following the correcting member 4 is allowed to accompany the correcting member 4 properly so that the pipe can be moved smoothly toward the sleeve base end. Still further, when, as the pipe is inserted into the pipe joint, the correcting member 4 parses over the lock ring 2 disposed on the base end 11a side of the sleeve, since the correcting member 4 is an elastically deformable member made of rubber or the like and can be deformed by itself, the correcting member 4 can advantageously pass over the area of the lock ring 2 easily.

Moreover, according to the invention, since there is employed a structure in which the lock ring 2 is mounted on the portion of the sleeve 11 that exists nearer to the distal end of the sleeve 11 than the arranging position of the correcting member 4 to be loosely fitted on the sleeve 11, the outer diameter of the lock ring 2 is set larger than the inner diameter d₄₂ of the small diameter portion 42, and the movement of the correcting member 4 to the distal end of the sleeve 11 is held by the lock ring 2 (Fig. 3), it is possible to provide, as a pipe joint, an integrally assembled product in which the O-rings 9, lock ring 2, correcting member and cap nut 3 are assembled to the joint main body 1. The pipe joint is easy to keep and store. For example, it is possible to eliminate a situation in which one or more of the parts are missing, which occurs in a case where the respective parts are separately kept and stored. Since the correcting member 4 is prevented from dropping from the sleeve 11, the pipe joint is remarkably easy to handle. Also, according to the pipe joint shown in Figs. 1 to 7 and 10, before it is used, when the correcting member 4 moves toward the base end 11a of the sleeve 11, the packing 9 butts against the correcting member 4 to thereby hold it, however, since no pressing load is applied to the packing 9 itself there is no possibility that the packing 9 can be distorted or permanently set. Therefore, when the pipe joint is in a non-use state, it can be advantageously stored for a long therm.

Also, the pipe 5, which is configured such that, as shown in Fig. 2, the pipe end 54 thereof reaches the base end 11a of the sleeve 11 through the correcting member 4 to thereby connect the pipe 5 to the pipe joint integrally, is contacted with the projecting portion 12 of the joint main body 1 through the correcting member 4. Therefore, even when a metal composite pipe is used as the pipe 5, there is no possibility that electric corrosion can occur, As the material of the metal composite pipe, there is normalcy used aluminum and, for the joint main body 1, there is normally used brass, Accordingly, when these two parts are contacted with each other, there is raised a problem of electric corrosion. In view of this, when the metal composite pipe is used, conventionally, there is interposed a. non-conductive spacer made of rubber or the like between them to avoid the mutual contact between them. However, according to the invention, since the correcting member 4 is made of non-conductive rubber, thermoplastic elastomer or the like which is excellent in the electric characteristics, the cost for preparing a spacer separately and the operation to mount the spacer can be saved, which is another advantage of the invention. In this manner, the pipe joint provides many excellent effects.

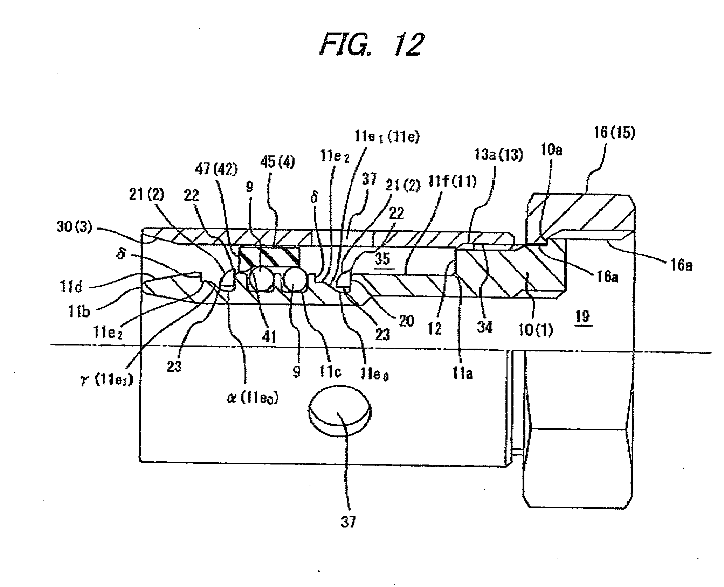

The present invention is not limited to the embodiments described above, and various changes and modifications can be made therein in accordance with purposes and uses thereof without departing from the scope of the invention. The shapes, sizes and number of the joint main body 1, lock ring 2, cap nut 3, correcting member 4, packing 9 and the like can be properly chosen according to the uses of the invention. For example, it is also possible to employ such a pipe joint as shown in Fig. 12. In the joint main body 1 shown in Fig. 12, the connecting portion 15 thereof is composed of a nut member 16. This nut member 16 may be configured such that it can be removed from the main portion 10 and, in use, the inner flange 16a of the nut member 16 is secured to the outer flange 10a of the main portion 10. The female screw portion 16b of the nut member 16 is formed as a threadedly engageable portion and is used as the connecting portion 15 which can be connected to the other joint

## Claims

1. A pipe joint comprising:
a joint main body (1) comprising a cylindrical sleeve (11) having an outer peripheral surface (11f) along which a ring-shaped groove (11c) is formed, and a main portion (10) from which the cylindrical sleeve (11) protrudes;
a packing (9) which is fitted in the ring-shaped groove (11c) and is adapted to firmly contact a pipe (5) to be fitted on the sleeve (11) to seal the pipe (5) ;
a cylindrical correcting member (4) which is loosely fitted on the sleeve (11) before the pipe (5) is fitted, the correcting member (4) comprising a small diameter portion (42) having an inner diameter (d42) which is smaller than an outer diameter of the packing (9), and a sloped portion (41) having an inner diameter which gradually increases from a side on the small diameter portion (42) toward a base end (11a) of the sleeve (11); and
a cylindrical cap nut (3) which is attached onto the joint main body (1) to surround the sleeve (11) and the correcting member (4),
wherein the correcting member (4) is elastically deformable, and a hardness of the correcting member (4) is set equal to or higher than a hardness of the packing (9),
the cap nut (3) comprises a cylindrical inner wall (31) to which the correcting member (4) lies close or contacts at least in a range in which the correcting member (4) moves over a portion of the sleeve (11) where the packing (9) is fitted,
upon receiving a pressure from the pipe (5) which is inserted from an opening (30) of the cap nut (3) so as to be fitted on the sleeve (11), the correcting member (4) moves toward the base end (11a) of the sleeve (11), and
wherein the packing (9) comprises at least two members, a first member being situated on the sleeve distal end (11b) side and a second member being situated on the sleeve base end (11a) side,
**characterized in that** the correcting member (4) further comprises a large diameter portion (43) occupying the major part of the correcting member (4), the large diameter portion (43) having an inner diameter (d₄₃) which is equal to or slightly larger than the outer diameter of the packing (9) and extending from the sloped portion (41) while keeping the inner diameter (d₄₃), and **in that**, at a position where the packing (9) catches the sloped portion (41), the large diameter portion (43) covers the first and second members.

2. The pipe joint according to claim 1, wherein, during the movement of the correcting member (4) toward the base end (11a) of the sleeve (11), the packing (9) catches the sloped portion (41) such that the small diameter portion (42) is disposed on a side of the packing (9) which is closer to a distal end (11b) of the sleeve (11), and
upon further receiving the pressure from the pipe (5) to be fitted on the sleeve (11), the sloped portion (41) presses and deforms the packing (9) to run over the packing (9) and further moves toward the base end (11a) of the sleeve (11).

3. The pipe joint according to claim 1 or 2, wherein a distal end portion of the sleeve (11) comprises a tapered part (11d) having an outer diameter which gradually decreases toward the distal end (11b) of the sleeve (11).

4. The pipe joint according to any of the preceding claims, further comprising a lock ring (2) having an outer diameter (D2) which is larger than the inner diameter (d42) of the small diameter portion (42),
wherein a peripheral groove (11e) is formed in the outer peripheral surface (11f) of the sleeve (11) at a location closer to the distal end (11b) of the sleeve (11) than from a location where the correcting member (4) is loosely fitted on the sleeve (11), and
the lock ring (2) is fitted in the peripheral groove (11e) to stop a movement of the correcting member (4) toward the distal end (11b) of the sleeve (11).

5. The pipe joint according to any of the preceding claims, wherein the correcting member (4) has a uniform outer diameter.

6. The pipe joint according to any of the preceding claims, wherein the packing (9) comprises a first O-ring situated on the sleeve distal end (11b) side and a second O-ring situated on the sleeve base end (11a) side.

## Patentansprüche

1. Rohrverbinder mit:
einem Verbindungshauptkörper (1) mit einer zylindrischen Hülse (11), die eine äußere Umfangsfläche (11f) aufweist, entlang derer eine ringförmige Rille (11c) ausgebildet ist, und einem Hauptabschnitt (10), von dem die zylindrische Hülse (11) hervorsteht;
einer Dichtung (9), welche in die ringförmige Rille (11c) eingepasst ist und eingerichtet ist, ein Rohr (5), welches auf der Hülse (11) anzubringen ist, fest zu kontaktieren, um das Rohr (5) abzudichten;
einem zylindrischen Korrekturelement (4), welches locker auf der Hülse (11) vor dem Anbringen des Rohrs (5) angebracht ist, wobei das Korrekturelement (4) einen kleindurchmessrigen Abschnitt (42) mit einem Innendurchmesser (d42), der kleiner als ein Außendurchmesser der Dichtung (9) ist, und einen Schrägabschnitt (41) aufweist, der einen Innendurchmesser aufweist, welcher sich graduell von einer Seite des kleindurchmessrigen Abschnitts (42) in Richtung eines Basisendes (11a) der Hülse (11) vergrößert; und
einer zylindrischen Hutmutter (3), die an dem Verbindungshauptkörper (1) angebracht ist, um die Hülse (11) und das Korrekturelement (4) zu umgeben,
wobei das Korrekturelement (4) elastisch verformbar ist und eine Härte des Korrekturelements (4) identisch oder höher als eine Härte der Dichtung (9) ist,
die Hutmutter (3) eine zylindrische Innenwand (31) aufweist, in deren Nähe das Korrekturelement (4) liegt oder dieses diese zumindest in einem Bereich berührt, in welchem sich das Korrekturelement (4) über einen Abschnitt der Hülse (11) bewegt, in dem die Dichtung (9) angebracht ist,
beim Aufnehmen eines Drucks des Rohrs (5), welches von einer Öffnung (30) der Hutmutter (3) so eingeführt wird, dass dieses auf der Hülse (11) angebracht wird, das
Korrekturelement (4) sich in Richtung des Basisendes (11a) der Hülse (11) bewegt, und
wobei die Dichtung (9) mindestens zwei Elemente aufweist, von denen ein erstes Element auf der Hülsendistalendseite (llb) und ein zweites Element auf der Hülsenbasisendseite (11a) angeordnet ist,
**dadurch gekennzeichnet, dass** das Korrekturelement (4) ferner einen großdurchmessrigen Abschnitt (43) aufweist, welcher den Hauptteil des Korrekturelements (4) einnimmt, wobei der großdurchmessrige Abschnitt (43) einen Innendurchmesser (d43) aufweist, welcher identisch oder leicht größer als der Außendurchmesser der Dichtung (9) ist, und sich vom Schrägabschnitt (41) erstreckt, während der Innendurchmesser (d43) aufrechterhalten wird, und dadurch, dass an einer Position, wo die Dichtung (9) den Schrägabschnitt (41) erreicht, der großdurchmessrige Abschnitt (43) das erste und zweite Element bedeckt.

2. Rohrverbinder nach Anspruch 1, bei dem die Dichtung (9) während der Bewegung des Korrekturelements (4) in Richtung des Basisendes (11a) der Hülse (11) den Schrägabschnitt (41) so erreicht, dass der kleindurchmessrige Abschnitt (42) auf einer Seite der Dichtung (9) angeordnet ist, welche näher an einem Distalende (11b) der Hülse (11) angeordnet ist, und
beim weiteren Aufnehmen des Drucks des Rohrs (5), welches auf der Hülse (11) anzubringen ist, der Schrägabschnitt (41) die Dichtung (9) drückt und verformt, um über die Dichtung (9) hinweg zu gehen und sich weiter in Richtung des Basisendes (11a) der Hülse (11) zu bewegen.

3. Rohrverbinder nach Anspruch 1 oder 2, bei dem ein Distalendabschnitt der Hülse (11) einen abgeschrägten Teil (11d) mit einem Außendurchmesser aufweist, welcher sich graduell in Richtung des Distalendes (11b) der Hülse (11) verringert.

4. Rohrverbinder nach einem der vorhergehenden Ansprüche mit ferner einem Verschlussring (2) mit einem Außendurchmesser (D2), welcher größer als der Innendurchmesser (d42) des kleindurchmessrigen Abschnitts (42) ist,
wobei eine Umfangsrille (11e) in der äußeren Umfangsfläche (11f) der Hülse (11) an einem Ort ausgebildet ist, welcher näher an dem Distalende (11b) der Hülse (11) als von einem Ort angeordnet ist, wo das Korrekturelement (4) locker auf der Hülse (11) angebracht ist, und
der Verschlussring (2) in der Umfangsrille (11e) angebracht ist, um eine Bewegung des Korrekturelements (4) in Richtung des Distalendes (11b) der Hülse (11) zu stoppen.

5. Rohrverbinder nach einem der vorhergehenden Ansprüche, bei dem das Korrekturelement (4) einen konstanten äußeren Durchmesser aufweist.

6. Rohrverbinder nach einem der vorhergehenden Ansprüche, bei dem die Dichtung (9) einen ersten O-Ring, der an der Hülsendistalendseite (11b) angeordnet ist, und einen zweiten O-Ring aufweist, der an der Hülsenbasisendseite (11a) angeordnet ist.

## Revendications

1. Joint de conduite comprenant :
un corps principal de joint (1) comprenant un manchon cylindrique (11) ayant une surface périphérique externe (11f) le long de laquelle est formée une rainure annulaire (11c), et une section principale (10) de laquelle dépasse le manchon cylindrique (11) ;
une garniture (9) qui est installée dans la rainure annulaire (11c) et est adaptée pour être en contact ferme avec une conduite (5) à installer sur le manchon (11) afin de sceller la conduite (5) ;
un organe de correction cylindrique (4) qui est installé sans être serré sur le manchon (11) avant l'installation de la conduite (5), l'organe de correction (4) comprenant une section de petit diamètre (42) ayant un diamètre interne (d42) qui est inférieur à un diamètre externe de la garniture (9), et une section inclinée (41) ayant un diamètre interne qui augmente progressivement depuis un côté sur la section de petit diamètre (42) vers une extrémité de base (11a) du manchon (11) ; et
un écrou borgne cylindrique (3) qui est fixé sur le corps principal de joint (1) afin d'entourer le manchon (11) et l'organe de correction (4),
dans lequel l'organe de correction (4) est déformable élastiquement, et une dureté de l'organe de correction (4) est établie comme étant supérieure ou égale à une dureté de la garniture (9),
l'écrou borgne (3) comprend une paroi interne cylindrique (31) près de laquelle se trouve l'organe de correction (4) ou avec laquelle il est en contact au moins dans une plage dans laquelle l'organe de correction (4) se déplace sur une section du manchon (11) où la garniture (9) est installée,
lorsqu'il reçoit une pression provenant de la conduite (5) qui est insérée par une ouverture (30) de l'écrou borgne (3) de façon à être installé sur le manchon (11), l'organe de correction (4) se déplace vers l'extrémité de base (11 a) du manchon (11), et
dans lequel la garniture (9) comprend au moins deux organes, un premier organe étant situé du côté de l'extrémité distale du manchon (11 b) et un second organe étant situé du côté de l'extrémité de base du manchon (11a),
**caractérisé en ce que** l'organe de correction (4) comprend en outre une section de grand diamètre (43) occupant la majeure partie de l'organe de correction (4), la section de grand diamètre (43) ayant un diamètre interne (d₄₃) qui est légèrement supérieur ou égal au diamètre externe de la garniture (9) et s'étendant depuis la section inclinée (41) tout en conservant le diamètre interne (d₄₃), et **en ce que**, en une position où la garniture (9) rattrape la section inclinée (41), la section de grand diamètre (43) recouvre les premier et second organes.

2. Joint de conduite selon la revendication 1, dans lequel, pendant le déplacement de l'organe de correction (4) vers l'extrémité de base (11a) du manchon (11), la garniture (9) rattrape la section inclinée (41) de sorte que la section de petit diamètre (42) est disposée d'un côté de la garniture (9) qui est plus près d'une extrémité distale (11b) du manchon (11), et
lorsqu'elle reçoit en outre la pression provenant de la conduite (5) à installer sur le manchon (11), la section inclinée (41) appuie sur et déforme la garniture (9) pour écraser la garniture (9) et se déplace en outre vers l'extrémité de base (11a) du manchon (11).

3. Joint de conduite selon la revendication 1 ou 2, dans lequel une section d'extrémité distale du manchon (11) comprend une partie effilée (11d) ayant un diamètre externe qui diminue progressivement vers l'extrémité distale (11 b) du manchon (11).

4. Joint de conduite selon l'une quelconque des revendications précédentes, comprenant en outre une bague de retenue (2) ayant un diamètre externe (D2) qui est supérieur au diamètre interne (d42) de la section de petit diamètre (42),
dans lequel une rainure périphérique (11e) est formée dans la surface périphérique externe (11f) du manchon (11) en un emplacement plus proche de l'extrémité distale (11b) du manchon (11) que d'un emplacement où l'organe de correction (4) est installé sans être serré sur le manchon (11), et
la bague de retenue (2) est installée dans la rainure périphérique (11e) afin d'arrêter un déplacement de l'organe de correction (4) vers l'extrémité distale (11 b) du manchon (11).

5. Joint de conduite selon l'une quelconque des revendications précédentes, dans lequel l'organe de correction (4) a un diamètre externe uniforme.

6. Joint de conduite selon l'une quelconque des revendications précédentes, dans lequel la garniture (9) comprend un premier joint torique situé du côté de l'extrémité distale (11b) du manchon et un second joint torique situé du côté de l'extrémité de base (11a) du manchon.
